(19) Europäisches Patentamt
European Patent Office
Office européen des brevets

(11) **EP 4 343 011 B1**

(12) **EUROPEAN PATENT SPECIFICATION**

(45) Date of publication and mention
of the grant of the patent:
**01.07.2026 Bulletin 2026/27**

(21) Application number: **22804505.0**

(22) Date of filing: **21.04.2022**

(51) International Patent Classification (IPC):
*B32B 15/01* *(2006.01)*     *C21D 9/46* *(2006.01)*
*C22C 38/00* *(2006.01)*     *C22C 38/02* *(2006.01)*
*C22C 38/04* *(2006.01)*     *C22C 38/08* *(2006.01)*
*C22C 38/12* *(2006.01)*     *C22C 38/14* *(2006.01)*
*C21D 8/04* *(2026.01)*      *C22C 38/16* *(2006.01)*
*C22C 38/26* *(2006.01)*     *C22C 38/28* *(2006.01)*
*C22C 38/32* *(2006.01)*     *C22C 38/38* *(2006.01)*
*C23C 2/02* *(2006.01)*      *C23C 2/06* *(2006.01)*
*C23C 2/26* *(2006.01)*      *C23C 2/28* *(2006.01)*
*C23C 30/00* *(2006.01)*     *C21D 8/02* *(2026.01)*

(52) Cooperative Patent Classification (CPC):
**C23C 30/00; B32B 15/013; C21D 8/021;
C21D 8/041; C22C 38/004; C22C 38/02;
C22C 38/04; C22C 38/08; C22C 38/12;
C22C 38/14; C22C 38/16; C22C 38/26;
C22C 38/28; C22C 38/32; C22C 38/38;** (Cont.)

(86) International application number:
**PCT/JP2022/018472**

(87) International publication number:
**WO 2022/244591 (24.11.2022 Gazette 2022/47)**

(54) **HOT DIP GALVANNEALED STEEL SHEET**

FEUERVERZINKTES UND WÄRMEBEHANDELTES STAHLBLECH

TÔLE D'ACIER GALVANISÉE À CHAUD ET RECUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2021 JP 2021086294**

(43) Date of publication of application:
**27.03.2024 Bulletin 2024/13**

(73) Proprietor: **NIPPON STEEL CORPORATION
Chiyoda-ku
Tokyo 100-8071 (JP)**

(72) Inventors:
• **KANETO, Taihei
Tokyo 100-8071 (JP)**
• **OKE, Takashi
Tokyo 100-8071 (JP)**
• **KAWAZU, Nayuta
Tokyo 100-8071 (JP)**
• **KOMURO, Atsushi
Tokyo 100-8071 (JP)**
• **MIYASHITA, Tomohiro
Tokyo 100-8071 (JP)**

(74) Representative: **Vossius & Partner
Patentanwälte Rechtsanwälte mbB
Siebertstrasse 3
81675 München (DE)**

(56) References cited:
WO-A1-2017/033901      CN-A- 107 532 264
JP-A- 2007 239 011      JP-A- 2007 239 011
JP-A- 2016 132 801      JP-A- H06 287 684
JP-A- H06 287 684       US-A1- 2018 258 514

(52) Cooperative Patent Classification (CPC): (Cont.)
**C23C 2/022; C23C 2/0224; C23C 2/06; C23C 2/26; C23C 2/28;** C21D 9/46

## Description

Technical Field

The present application discloses a hot dip galvannealed steel sheet.

A hot dip galvannealed steel sheet is excellent in coatability etc.,so it is made much use of for automobile body applications first and foremost and for external members of household electric appliances, building materials, and the like. On the other hand, in a hot dip galvannealed steel sheet, streaking easily occurs in the plating. This streaking remains even after coating. Sometimes it is not possible to satisfy the appearance required as an external member. That is, if streaking occurs in plating and the plating appearance becomes poor, the appearance after coating will also easily become poor.

As measures against streaking of the plating layerin a hot dip galvannealed steel sheet, various methods have been proposed.For example, PTL 1 discloses a method for optimizing the balance between the Ti and Nb contained in a base steel sheet consisting of IF steel and suppressing the amounts of addition of Mn, P, and Si to suppress the occurrence of uneven plating at the steel sheet surface. Further, PTL 2 discloses the method, in a base steel sheet consisting of IF steel, of suppressing the occurrence of streaking of plating derived from surface defects of the steel sheet by making the X-ray intensity of the {100} face in the direction parallel to the steel sheet surface a random intensity ratio of 0.8 or less and making a ratio of nonrecrystallized grains 0.10% or less. Furthermore, PTL 3 discloses a method, in a base steel sheet consisting of BH steel, of suppressing the occurrence of streaking of plating by making the Mn concentration of the surface layer after annealing not more than a predetermined upper limit.

PTL 4 discloses a method for producing an alloyed hot-dip galvanized steel sheet having excellent surface properties, wherein an ingot with the recited chemical composition is loaded into a heating furnace at a loading temperature T satisfying the following equation (1), heating the ingot to a maximum temperature of 1150°C to 1350°C, and then rolling the ingots in a rough rolling mill followed by finishing rolling with an entry temperature to the finishing rolling mill of 920 to 1040°C or 1090 to 1180°C.

$$T \leq 69.3 \times \ln(Mn\%) + 1075.7 ... \ (1)$$

Citations List

Patent Literature

[PTL 1] Japanese Unexamined Patent Publication No. 2006-291272
[PTL 2] Japanese Unexamined Patent Publication No. 2016-132801
[PTL 3] WO2016/170794
[PTL 4] JP 2007/239011 A

Summary of Invention

Technical Problem

As explained above, solutions for the streaking of plating of a hot dip galvannealed steel sheet have been proposed from various viewpoints, but it is difficult to say that sufficient effects have been obtained. On this point, in a hot dip galvannealed steel sheet, there is still room for improvement in suppressing streaking of plating and enhancing appearance.

Further, the hot dip galvannealed steel sheet used for the above applications is usually used after being press-formed. In the prior art, at the time of press-forming of the hot dip galvannealed steel sheet, the nonalloyed plating parts may adhere to the die and impair the shapeability and productivity. Further, cracking may occur due to secondary work embrittlement.

Furthermore, the hot dip galvannealed steel sheet used for the above applications is preferably high in balance of strength and ductility. In the prior art, hot dip galvannealed steel sheet excellent in balance of strength and ductility has not been sufficiently studied.

Solution to Problem

As one means for solving the above technical problem, the present application discloses:

a hot dip galvannealed steel sheet as defined in claim 1.
Preferred embodiments are defined in the dependent claims.

[EFFECTS]

The hot dip galvannealed steel sheet of the present disclosure is resistant to streaking of the plating and is excellent in plating appearance and coated appearance. Further, the hot dip galvannealed steel sheet of the present disclosure is excellent in wettability of the plating to the base steel sheet, is easily suppressed in adhesion of the nonalloyed plating parts to the die at the time of press-forming, and is easily suppressed in secondary work embrittlement as well.

Brief Description of Drawings

FIG. 1 is a schematic view showing the form of concentrated Mn parts at a surface of a base steel sheet.
FIG. 2 is a schematic view for explaining a mechanism by which streaking occurs in a hot dip galvannealed plating layer.
FIG. 3 is a schematic view for explaining Condition 1.
FIG. 4 is a schematic view for explaining Condition 2.

Description of Embodiments

1. Hot Dip Galvannealed Steel Sheet

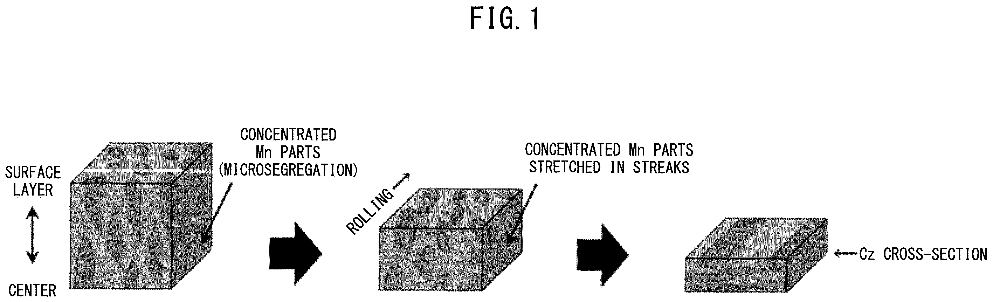

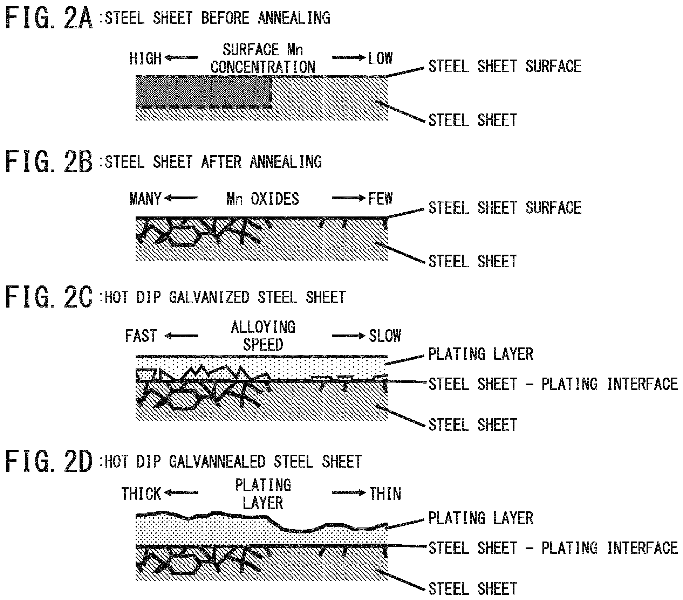

According to the new discovery of the inventors, the plating streaking in a hot dip galvannealed steel sheet is due to the uneven Mn concentration occurring at the ground iron surface due to microsegregation of Mn at the time of slab solidification. As shown in FIG. 1, the concentrated Mn parts at the ground iron surface of the slab are stretched in the rolling direction due to the rolling and form streaking. That is, when rolling a slab to obtain a steel sheet, at the surface of the steel sheet, the concentrated Mn parts are elongated in streaks along the rolling direction. As shown in FIG. 2, if annealing the steel sheet in such a state (FIG. 2A) for example, Mn oxides (for example, $Mn_2SiO_4$) are formed at the surface layer of the steel sheet. Due to the pinning effect of the Mn oxides, crystal grain growth at the surface layer can be suppressed (FIG. 2B). That is, in concentrated Mn parts of a base steel sheet, compared with parts other than the concentrated Mn parts, the grain boundary density easily becomes higher. After that, if the base steel sheet is formed with a galvanized layer and further is alloyed, alloying is promoted at the parts with higher grain boundary density (FIG. 2C). By the plating layer growing thicker, streaking occurs at the plating layer ((FIG. 2D).
As explained above, the plating streaking at the hot dip galvannealed steel sheet can be said to occur due to the uneven concentration of Mn at the surface of the base steel sheet. On the other hand, according to a new discovery of the inventors, the level of perception of the plating streaking changes depending on the difference of the extent of that uneven concentration of Mn. That is, even if uneven concentration of Mn had occurred, if the interval between the uneven concentrations is sufficiently narrow or sufficiently broad, plating streaking detracting from the appearance is hard to occur. On this point, by controlling the distribution of concentration of Mn at the surface of the base steel sheet, it is possible to improve the plating streaking at the hot dip galvannealed steel sheet. In this way, the inventors discovered that the level of perception of the plating streaking does not depend on only the "amount" of concentrated Mn of the base steel sheet surface layer such as disclosed in the prior art (for example, PTL 3), more accurately, depends on the "distribution" of the Mn.
The distribution of Mn at the surface of the base steel sheet can be quantified by the standard deviation etc. of Mn intensities obtained using an electron probe microanalyzer (EPMA). Further, the distribution of Mn at the surface of the base steel sheet can, for example, be controlled by the heating temperature of the slab before hot rolling (intended to make Mn diffuse at a high temperature) etc.
The present invention was completed based on the above new discovery. Below, embodiments of the present invention will be explained. Note that, the explanation of these is intended to just illustrate the embodiments of the present invention. The present invention is not limited to the following embodiments.
The hot dip galvannealed steel sheet according to the present embodiment has a base steel sheet and a plating layer. The base steel sheet has a chemical composition containing, by mass%,

C: 0.0005 to 0.0100%,
Si: 0.01 to 0.50%,
Mn: 0.01 to 2.00%,

P: 0.100% or less,
S: 0.0100% or less,
N: 0.0200% or less,
Ti: 0.040 to 0.180%,
Nb: 0 to 0.100%,
B: 0.0005 to 0.0100%,
Al: 0 to 1.000%,
Cu: 0 to 1.000%,
Cr: 0 to 2.000%,
Ni: 0 to 0.500%,
Mo: 0 to 3.000%,
W: 0 to 0.100%,
V: 0 to 1.000%,
O: 0 to 0.020%,
Ta: 0 to 0.100%,
Co: 0 to 3.000%,
Sn: 0 to 1.000%,
Sb: 0 to 0.500%,
As: 0 to 0.050%,
Mg: 0 to 0.050%,
Zr: 0 to 0.050%,
Ca: 0 to 0.0500%,
REM: 0 to 0.0500% and
a balance of Fe and impurities. Further, a standard deviation SD found under the following Condition 1 is 0.40 or less, and an interval I found under the following Condition 2 is 50 $\mu$m or less.

Condition 1: An electron probe microanalyzer (EPMA) is utilized to divide a 2 mm square region at a surface of the base steel sheet into a 400 x 400 plurality of areas for elemental mapping and identify the Mn intensities at the individual areas. The standard deviation SD is found from the distribution of the number of detection points of the Mn intensities at the square region.

Condition 2: An electron probe microanalyzer (EPMA) is utilized to divide a 2 mm square region at a surface of the base steel sheet into a 400 x 400 plurality of areas for elemental mapping and identify the Mn intensities at the individual areas. The average value $MI_{ave}$ of the Mn intensities at the square region is identified. The square region is divided into 400 regions in the direction perpendicular to the rolling direction to obtain 400 divided regions. Among these divided regions, those with 50% or more areas exhibiting Mn intensities 34% or more higher than the average value $MI_{ave}$ are defined as "first regions". Among these divided regions, those with 50% or more areas exhibiting Mn intensities 34% or more lower than the average value $MI_{ave}$ are defined as "second regions". The interval I of first regions adjoining each other across second regions in the square region is found.

1.1 Chemical Composition of Base Steel Sheet

First, the reasons for limiting the chemical composition of the base steel sheet will be explained. Here, the "%" of the constituents means mass%. Furthermore, in the present application, the "to" showing a numerical range, unless otherwise indicated, is used in the sense including the numerical values described before and after it as the lower limit value and upper limit value.

(C: 0.0005 to 0.0100%)

The smaller the amount of C in the base steel sheet, the more the mechanical properties such as the elongation and r-value are improved. In the present embodiment, C can be fixed by the later explained Ti or Nb, but if TiC or NbC increases too much, the dependency of the mechanical properties of the base steel sheet on the annealing temperature becomes higher and the range of annealing conditions for obtaining the desired mechanical properties is liable to become narrower. Further, in the base steel sheet, if the amount of dissolved C remaining without being fixed by the Ti or Nb is great, alloying of the plating may be impeded. On this point, the C content is 0.0100% or less and may be 0.0080% or less, 0.0060% or less, or 0.0040% or less. Further, from the viewpoint of suppressing excessive rise of the steelmaking costs, the C content is 0.0005% or more and may be 0.0010% or more, 0.0015% or more or 0.0020% or more.

(Si: 0.01 to 0.50%)

Si is an element improving the strength of the base steel sheet. On the other hand, if the base steel sheet excessively contains Si, the wettability of the plating with respect to the base steel sheet may worsen. Further, if the base steel sheet excessively includes Si, alloying of the plating becomes slower and the number of nonalloyed plating parts may be greater at the hot dip galvannealed steel sheet. On this point, the Si content is 0.50% or less and may be 0.48% or less or 0.46% or less. Further, the Si content is 0.01% or more and may be 0.05% or more, 0.10% or more, or 0.20% or more.

(Mn: 0.01 to 2.00%)

Mn is an element improving the strength of the base steel sheet. On the other hand, if the Mn content becomes excessively great, the elongation of the steel sheet is liable to fall. On this point, the Mn content is 2.00% or less and may be 1.95% or less. Further, the Mn content is 0.01% or more and may be 0.05% or more, 0.10% or more, or 0.20% or more. Further, according to the new discovery of the inventors, if the Mn content in the base steel sheet is within a specific range, plating streaking detracting from the appearance becomes harder to occur. That is, if the Mn content is small, uneven Mn concentration of an extent causing streak-like appearance defects is hard to occur. Further, if the Mn content is great, the Mn concentration rises at the surface of the base steel sheet as a whole and the above uneven Mn concentration is easily resolved. If considering the above, in the present embodiment, from the viewpoint of improving the appearance of the hot dip galvannealed steel sheet and securing the elongation, the Mn content may be 0.01 to 1.30% or 1.70 to 2.00%. The Mn content may be 0.50% or more or 1.00% or more and may be 1.20% or less. Alternatively, the Mn content may be 1.75% or more and may be 1.95% or less.

(P: 0.100% or Less)

P is an element improving the strength of the base steel sheet and may be added optionally. On the other hand, if the base steel sheet excessively contains P, the alloying of the plating becomes slower and the number of nonalloyed plating parts may be greater at the hot dip galvannealed steel sheet. On this point, the P content is 0.100% or less and may be 0.090% or less. The lower limit of the P content is not particularly prescribed. The P content is 0% or more and may be 0.001% or more.

(S: 0.0100% or Less)

S is an element segregating at the grain boundaries of the base steel sheet and causing secondary work embrittlement. Further, it is an element forming MnS and other nonmetallic inclusions in the steel and inviting a drop in ductility of the base steel sheet. The smaller the amount, the more preferable. The S content is 0% or more and may be 0.0005% or more, 0.0010% or more, or 0.0020% or more. Further, it is 0.0100% or less and may be 0.0090% or less or 0.0080% or less.

(N: 0.0200% or Less)

N is an element forming coarse nitrides in the base steel sheet and lowering the workability of the steel sheet. Further, N is an element becoming a cause of formation of blowholes at the time of welding. Further, if excessively containing N, it bonds with Ti to cause the formation of TiN and the effective amount of Ti for fixing the C is liable to fall. On this point, the N content is 0.0200% or less and may be 0.0150% or less, 0.0100% or less, 0.0080% or less, or 0.0060% or less. Further, the N content is 0% or more, but from the viewpoint of keeping down an excessive rise in the steelmaking costs, the N content may be 0.0001% or more or 0.0010% or more.

(Ti: 0.040 to 0.180%)

Ti is an element fixing C to improve the mechanical properties of elongation and the r-value of the base steel sheet. If the Ti content is 0.040% or more, such an effect is easily obtained. The Ti content may be 0.045% or more or 0.050% or more. On the other hand, if the Ti content is too great, the balance of the strength and ductility of the base steel sheet is liable to deteriorate. If the Ti content is 0.180% or less, such a problem is easily avoided. The Ti content may be 0.150% or less, 0.120% or less, or 0.100% or less.

(Nb: 0 to 0.100%)

Nb, like Ti, is an element fixing C to improve the mechanical properties of elongation and the r-value of the base steel sheet. However, the effect is weaker than Ti. As explained above, an effect of fixing the C is obtained due to Ti, so the Nb content may be 0%. The Nb content is 0% or more and may be 0.001% or more, 0.005% or more, or 0.010% or more. On the other hand, if the Nb content is too great, the dependency of the mechanical properties of the base steel sheet on the annealing temperature becomes higher and the range of annealing conditions for obtaining the desired mechanical properties is liable to become narrower. On this point, the Nb content is 0.100% or less and may be 0.060% or less or 0.040% or less.

(B: 0.0005 to 0.0100%)

B is an element for preventing secondary work embrittlement of the base steel sheet. In the present embodiment, as explained above, Ti and Nb can fix the C and remove the grain boundary C, but if removing the grain boundary C, secondary work embrittlement easily occurs. In the present embodiment, B is included instead of C in the base steel sheet so as to easily avoid such a problem. In particular, if B content is 0.0005% or more, such a problem is even more easily avoided. The B content may be 0.0007% or more or 0.0009% or more. On the other hand, if the base steel sheet excessively contains B, the alloying of the plating becomes slower and nonalloyed plating parts may increase at the hot dip galvannealed steel sheet. On this point, the B content is 0.0100% or less and may be 0.0050% or less or 0.0020% or less.

(Al: 0 to 1.000%)

Al is an element acting as a deoxidizer of steel and is added according to need. On the other hand, if excessively containing Al, the balance of strength and ductility may deteriorate. The Al content is 0% or more and may be 0.001% or more, 0.005% or more, 0.010% or more, or 0.015% or more. Further, it is 1.000% or less and may be 0.700% or less, 0.500% or less, 0.300% or less, 0.100% or less, 0.080% or less, 0.060% or less, or 0.040% or less.
The basic chemical composition of the base steel sheet in the present embodiment is as explained above. Further, the base steel sheet in the present embodiment may contain at least one of the following elements according to need. These elements need not be included, so the lower limits of the contents of the same are 0%. These elements have no substantial effect on the mechanism of the solution of the problem in the present embodiment.

(Cu: 0 to 1.000%)

Cu is an element able to contribute to improvement of at least one of the strength and corrosion resistance. On the other hand, if excessively containing Cu, deterioration of the toughness is liable to be invited. The Cu content is 0% or more and may be 0.001% or more, 0.010% or more, 0.050% or more, or 0.100% or more. Further, it is 1.000% or less and may be 0.800% or less, 0.600% or less, 0.400% or less, 0.250% or less, or 0.150% or less.

(Cr: 0 to 2.000%)

Cr is an element raising the hardenability of steel and able to contribute to improvement of at least one of strength and corrosion resistance. On the other hand, if excessively containing Cr, the alloy costs may increase and in addition the toughness may fall. The Cr content is 0% or more and may be 0.001% or more, 0.010% or more, 0.050% or more, or 0.100% or more. Further, it is 2.000% or less and may be 1.500% or less, 1.000% or less, 0.500% or less, 0.300% or less, or 0.150% or less.

(Ni: 0 to 0.500%)

Ni is an element raising the hardenability of steel and able to contribute to improvement of at least one of strength and heat resistance. On the other hand, if excessively containing Ni, the effect becomes saturated and a rise in the production costs is liable to be invited. The Ni content is 0% or more and may be 0.001% or more, 0.010% or more, 0.030% or more, or 0.050% or more. Further, it is 0.500% or less and may be 0.400% or less, 0.300% or less, 0.200% or less, or 0.100% or less.

(Mo: 0 to 3.000%)

Mo is an element raising the hardenability of steel and able to contribute to improvement of at least one of strength and corrosion resistance. On the other hand, if excessively containing Mo, the deformation resistance at the time of working is liable to increase. The Mo content is 0% or more and may be 0.001% or more, 0.005% or more, 0.010% or more, or 0.020% or more. Further, it is 3.000% or less and may be 2.000% or less, 1.000% or less, 0.500% or less, or 0.100% or less.

(W: 0 to 0.100%)

W is an element raising the hardenability of steel and able to contribute to improvement of strength. On the other hand, if excessively containing W, coarse inclusions are liable to form. The W content is 0% or more and may be 0.001% or more, 0.005% or more, or 0.010% or more. Further, it is 0.100% or less and may be 0.080% or less, 0.050% or less, or 0.030% or less

(V: 0 to 1.000%)

V is an element able to contribute to improvement of strength by precipitation strengthening etc. On the other hand, if excessively containing V, a large amount of precipitates may form and the toughness may be lowered. The V content is 0% or more and may be 0.001% or more, 0.010% or more, 0.030% or more, or 0.050% or more. Further, it is 1.000% or less and may be 0.800% or less, 0.500% or less, 0.300% or less, 0.100% or less, or 0.070% or less.

(O: 0 to 0.020%)

O is an element able to enter in the production process. To lower the O content to the maximum extent, time is required in refining and a drop in productivity is invited. On the other hand, if excessively containing O, coarse inclusions may be formed and the toughness of the steel material may be lowered. The O content is 0% or more and may be 0.001% or more, 0.002% or more, or 0.003% or more. Further, it is 0.020% or less and may be 0.015% or less, 0.010% or less, or 0.005% or less.

(Ta: 0 to 0.100%)

Ta is an element able to contribute to control of the form of the carbides and increase of strength. On the other hand, if excessively containing Ta, a large number of fine Ta carbides precipitate and the toughness is liable to fall. The Ta content is 0% or more and may be 0.001 % or more, 0.005% or more, 0.010% or more, or 0.020% or more. Further, it is 0.100% or less and may be 0.080% or less, 0.060% or less, or 0.040% or less.

(Co: 0 to 3.000%)

Co is an element able to contribute to improvement of at least one of hardenability and heat resistance. On the other hand, if excessively containing Co, the workability is liable to fall and an increase in material costs is led to. The Co content is 0% or more and may be 0.001% or more, 0.010% or more, 0.020% or more, or 0.050% or more. Further, it is 3.000% or less and may be 2.000% or less, 1.000% or less, 0.500% or less, 0.200% or less, or 0.100% or less.

(Sn: 0 to 1.000%)

Sn is an element able to contribute to improvement of corrosion resistance. On the other hand, if excessively containing Sn, a drop in toughness is liable to be invited. The Sn content is 0% or more and may be 0.001% or more, 0.005% or more, 0.010% or more, or 0.020% or more. Further, it is 1.000% or less and may be 0.800% or less, 0.500% or less, 0.300% or less, 0.100% or less, or 0.050% or less.

(Sb: 0 to 0.500%)

Sb is an element able to contribute to improvement of the corrosion resistance. On the other hand, if excessively containing Sb, a drop in the toughness is liable to be invited. The Sb content is 0% or more and may be 0.001% or more, 0.005% or more, or 0.010% or more. Further, it 0.500% or less and may be 0.300% or less, 0.100% or less, or 0.050% or less.

(As: 0 to 0.050%)

As is an element able to contribute to improvement of the machineability of steel. On the other hand, if excessively containing As, the workability is liable to deteriorate. The As content is 0% or more and may be 0.001% or more, 0.005% or more, or 0.010% or more. Further, it is 0.050% or less and may be 0.040% or less, 0.030% or less, or 0.020% or less.

(Mg: 0 to 0.050%)

Mg is an element able to contribute to control of the form of sulfides. On the other hand, if excessively containing Mg, the toughness is liable to decline. The Mg content is 0% or more and may be 0.001% or more, 0.003% or more, or 0.005% or more. Further, it is 0.050% or less and may be 0.030% or less, 0.020% or less, or 0.015% or less.

(Zr: 0 to 0.050%)

Zr is an element able to contribute to control of the form of sulfides. On the other hand, if excessively containing Zr, the effect will be saturated and a rise in production costs is liable to be invited. The Zr content is 0% or more and may be 0.001% or more, 0.003% or more, 0.005% or more, or 0.010% or more. Further, it is 0.050% or less and may be 0.040% or less, 0.030% or less, or 0.020% or less.

(Ca: 0 to 0.0500%)

Ca is an element able to control the form of sulfides by addition in a trace amount. On the other hand, if excessively containing Ca, the effect becomes saturated and a rise in production costs is liable to be invited. The Ca content is 0% or more and may be 0.0001% or more, 0.0005% or more, 0.0010% or more, or 0.0020% or more. Further, it is 0.0500% or less and may be 0.0300% or less, 0.0200% or less, 0.0100% or less, 0.0070% or less, or 0.0040% or less.

(REM: 0 to 0.0500%)

A REM, like Ca, is an element able control the form of sulfides in a trace amount. On the other hand, if excessively containing a REM, coarse inclusions are liable to be formed. The REM content is 0% or more and may be 0.0001% or more, 0.0005% or more, 0.0010% or more, or 0.0020% or more. Further, it is 0.0500% or less and may be 0.0300% or less, 0.0200% or less, 0.0100% or less, 0.0070% or less, or 0.0040% or less. Further, a "REM" in this Description is a general name for the 17 elements of atomic number 21 scandium (Sc), atomic number 39 yttrium (Y), and the lanthanoids of atomic number 57 lanthanum (La) to atomic number 71 lutetium (Lu). The REM content is the total content of these elements.

In the present embodiment, the balance of the chemical composition of the base steel sheet other than the constituents described above consists of Fe and impurities. "Impurities" are constituents entering due to various factors in the production process such as first and foremost the raw materials such as ore or scrap etc. when industrially producing the base steel sheet according to the present embodiment.

1.2 Condition 1

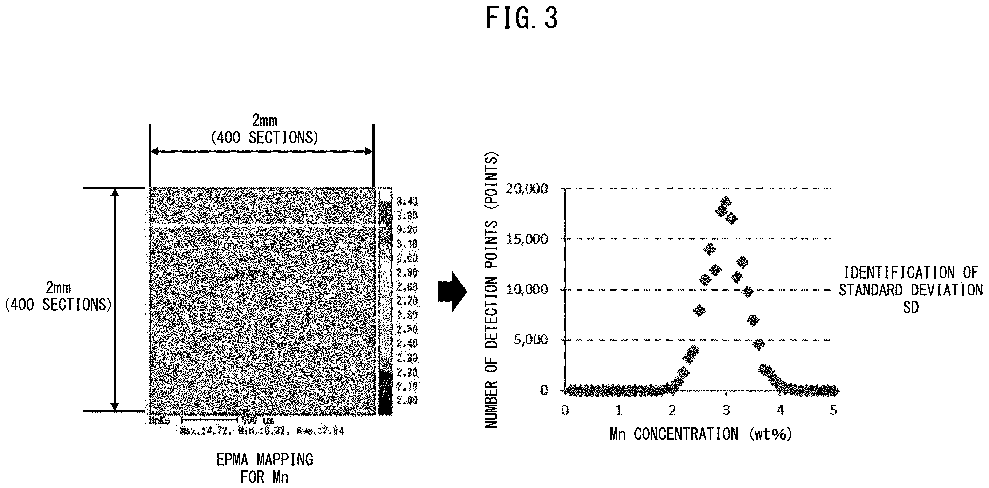

In the present embodiment, the base steel sheet has a standard deviation SD of 0.40 or less, which is found under the above Condition 1. That is, when analyzing the distribution of Mn by EPMA mapping of the surface of the base steel sheet, the variation in the Mn intensities is small. As shown in FIG. 3, under the above Condition 1, EPMA is utilized to acquire EPMA mapping of the Mn intensities of a 2 mm square region at the surface of the base steel sheet. Here, the square region is divided into a 400 x 400 plurality of areas for elemental mapping to identify the Mn intensities at the individual areas. The Mn intensities at the individual areas identified are combined in a histogram. The standard deviation SD can be found from the distribution of number of detection points of the Mn intensities at the square region. According to the discovery of the inventors, if the standard deviation found in this way is too large, the variation in distribution of Mn at the surface of the base steel sheet will be too large and plating streaking will easily occur when forming a hot dip galvannealed layer on the base steel sheet. In contrast, in the present embodiment, by the standard deviation SD found in the above way being 0.40 or less, at the time of alloying the hot dip galvannealed layer, it is possible to keep down variation of the alloying speed and make occurrence of the above streaking difficult. The standard deviation SD may be 0.39 or less or 0.38 or less. The lower limit of the standard deviation SD is not particularly prescribed and may be 0, but realistically it becomes more than 0. The standard deviation SD may be 0.20 or more or 0.30 or more.

1.3 Condition 2

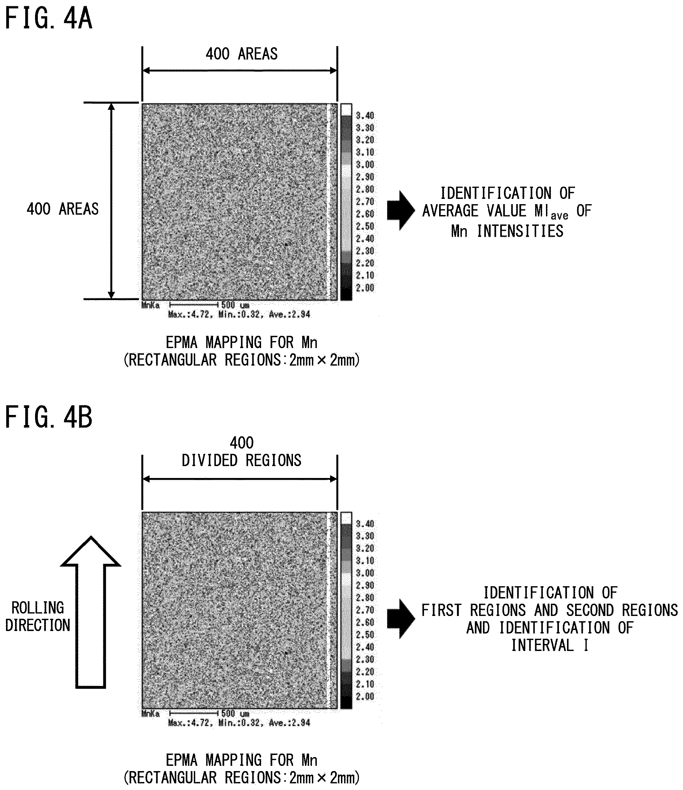

In the present embodiment, the base steel sheet has an interval I of 50 $\mu$m or less, which is found under the above Condition 2. That is, when analyzing the distribution of Mn by EPMA mapping of the surface of the base steel sheet, the interval of regions (first regions) with Mn intensities which are relatively large in a direction perpendicular to the rolling direction is narrow. In other words, at the surface of the base steel sheet, the distance between concentrated Mn parts, which are factors causing plating streaking, is narrower. As shown in FIG. 4, under the above Condition 2, EPMA is utilized to acquire EPMA mapping of the Mn intensities of a 2 mm square region at the surface of the base steel sheet. Here, the square region is divided into a 400 x 400 plurality of areas for elemental mapping to identify the Mn intensities at the individual areas. The average value of the Mn intensities in the individual areas identified is taken, that is, the average value $MI_{ave}$ of the Mn intensities in the square region is identified (FIG. 4(A)). On the other hand, the same square region is divided into 400 sections in the direction perpendicular to the rolling direction so as to obtain 400 divided regions. Among these divided regions, ones having 50% or more areas exhibiting Mn intensities 34% or more higher than the average value $MI_{ave}$ are defined as "first regions". Among these divided regions, ones having 50% or more areas exhibiting Mn intensities 34% or more lower than the average value $MI_{ave}$ are defined as "second regions". The interval I between adjoining first regions adjoining each other across second regions in the square region is found (FIG. 4(B)). According to the discovery of the inventors, if the interval I found in the above way is 50 $\mu$m or less, the distance between concentrated Mn parts, which are factors causing plating streaking, becomes sufficiently narrow thereby making the occurrence of plating streaking difficult to observe when forming a hot dip galvannealed layer on the base steel sheet. The interval I may be 45 $\mu$m or less or 40 $\mu$m or less. The lower limit of the interval I is not particularly prescribed. The interval I may be 0 $\mu$m or more, 5 $\mu$m or more, 10 $\mu$m or more, 15 $\mu$m or more, 20 $\mu$m or more, 25 $\mu$m or more, or 30 $\mu$m or more. Further, in the present embodiment, if in one EPMA mapping the first region and second region are repeatedly present and a plurality of intervals I are identified, the largest interval among the plurality of intervals I need only be 50 $\mu$m or less. Further, if there are no first regions or second regions present in the EPMA mapping, the interval I is deemed to be 0 $\mu$m.

Further, in the present application, the "rolling direction" of the base steel sheet can be identified by the orientation of the streaks formed at the base steel sheet. For example, as shown in FIG. 1, the rolling direction can be identified based on the stretched direction of the concentrated Mn parts. The stretched direction of the concentrated Mn parts in the base steel sheet may also be identified by for example element mapping utilizing the EPMA.

1.4 Microstructure

The microstructure of the base steel sheet is not particularly limited and can be adjusted in accordance with the performance sought from the base steel sheet. In the present embodiment, the microstructure of the base steel sheet may be, by area ratio, for example ferrite: 94 to 100%, martensite and bainite in total: 0 to 4%, and retained austenite: 0 to 2%. The phases and the area ratios of the microstructure can be identified for example as follows:

The area ratio of the retained austenite is evaluated by high resolution crystal structure analysis using the EBSD method (electron backscattered diffraction method). Specifically, a cross-section parallel to the rolling direction and sheet thickness direction of the base steel sheet is made the observed surface to take a sample. The observed surface is polished to a mirror finish. Furthermore, electrolytic polishing or mechanical polishing using colloidal silica is performed for removing the worked layer of the surface layer. Next, at the 1/4 thickness position, five fields, each field being 10000 $\mu$m$^2$ or more, are analyzed for crystal structure by the EBSD method. Further, the distance between evaluation points (step) is 0.01 to 0.20 $\mu$m. The data obtained by the EBSD method is analyzed using analysis software (for example, "OIM Analysis" made by TSL). From the results of examination of these positions, regions judged as FCC iron are judged to be retained austenite and the area ratio of retained austenite is calculated.

The area ratios of the ferrite, martensite, bainite, and pearlite are measured in the following way. First, a sample is taken using a cross-section of the base steel sheet parallel to the rolling direction and thickness direction as the observed section. The observed section is polished and etched by Nital. Next, in a range of 1/8 thickness to 3/8 thickness centered about a position of 1/4 thickness from the surface, a total of five fields, each field being 1200 $\mu$m$^2$ or more, are examined by a field emission scanning electron microscope (FE-SEM). Further, the area ratios of ferrite, bainite, martensite, and pearlite were respectively measured. Here, the structures are identified in the following way. A region in which cementite precipitates in a lamellar state is judged to be pearlite. A region with a relatively low brightness is judged to be ferrite. The respective area ratios are calculated by the point counting method. After that, the area ratio of other regions minus the area ratio of retained austenite obtained by the EBSD method in advance is deemed the area ratio of martensite and bainite in total.

1.5 Plating Layer

The hot dip galvannealed steel sheet according to the present embodiment has the above base steel sheet and plating layer. The plating layer is formed on at least one surface of the base steel sheet. The plating layer may be a hot dip galvannealed layer having a composition known to persons skilled in the art. For example, the plating layer may contain Al and other added elements besides Zn. In the hot dip galvannealed steel sheet according to the present embodiment, the chemical composition of the plating layer may be, for example, by mass%, Fe: 5 to 25%, Al: 0 to 1.0%, Si: 0 to 1.0%, Mg: 0 to 1.0%, Mn: 0 to 1.0%, Ni: 0 to 1.0%, Sb: 0 to 1.0%, and a balance: Zn and impurities. The Al content at the plating layer may be more than 0 mass% or 0.1 mass% or more. The amount of deposition of the plating layer is not particularly limited, but may be a general amount of deposition.

The chemical composition of the plating layer can for example be identified by the following procedure. That is, a coating remover not eating away at the plating (for example, Neo River SP-751 made by Sansaikako) is used to remove the surface layer coating, then hydrochloric acid containing an inhibitor (for example, Hibiron made by Sugimura Chemical Industrial Co., Ltd.) is used to dissolve the plating layer. The obtained solution can be supplied for inductively coupled plasma (ICP) emission spectrometry to find the chemical composition of the plating layer.

1.6 Other Properties of Hot Dip Galvannealed Steel Sheet

The hot dip galvannealed steel sheet in the present embodiment need only be one with a base steel sheet having the above chemical composition and satisfying the standard deviation SD and interval I. Further, in the present embodiment, the hot dip galvannealed steel sheet may further have the following properties.

(Tensile Strength TS)

To lighten the weight of structural members using steel as their base materials and to improve the resistance of the structural members in plastic deformation, the steel material preferably has a large work hardening ability and exhibits maximum strength. On the other hand, if the tensile strength of the steel sheet is too large, fracture becomes easier to occur by low energy during plastic deformation and the shapeability may fall. The tensile strength of the hot dip galvannealed steel sheet may for example be 430 MPa or more, 450 MPa or more, 500 MPa or more, or 520 MPa or more and, further, may be 600 MPa or less, 580 MPa or less, 550 MPa or less, or 500 MPa or less.

(Total Elongation EL)

When shaping steel sheet cold to produce a structural member, to finish it into a complicated shape, the steel sheet requires elongation. If the total elongation of the steel sheet is too low, the material may break in the cold shaping. The total elongation of the steel sheet is not particularly limited, but for example may be 25% or more or 30% or more and, further, may be 40% or less or 35% or less.

(Yield Point YP)

In the present embodiment, the yield point of the steel sheet is not particularly limited, but for example may be 195 MPa or more, 200 MPa or more, 210 MPa or more, 250 MPa or more, 280 MPa or more, or 300 MPa or more and, further, may be 420 MPa or less, 400 MPa or less, 380 MPa or less, 350 MPa or less, 340 MPa or less, or 320 MPa or less.

(Methods of Measurement of Tensile Strength, Total Elongation, and Yield Point)

The tensile test for measuring the tensile strength, total elongation, and yield point is based on JIS Z 2241. A JIS No. 5 test piece is taken from a direction in which the long direction of the test piece becomes parallel to the direction perpendicular to rolling of the steel strip.

(Sheet Thickness)

The thickness of the base steel sheet is a factor having an impact on the rigidity of the steel member after shaping. The greater the sheet thickness, the higher the rigidity of the member. If the sheet thickness is too small, a drop in the rigidity is invited and the press formability may fall due to the effect of unavoidable nonferrous inclusions present inside the steel sheet. On the other hand, if the sheet thickness is too great, the press-forming load increases and die wear or a drop in productivity may be invited. The thickness of the base steel sheet is not particularly limited, but may be 0.2 mm or more and may be 6.0 mm or less.

1.7 Effects

As explained above, the hot dip galvannealed steel sheet according to the present embodiment has a distribution of Mn at the surface of the base steel sheet (distribution of concentrated Mn parts) controlled to a predetermined state. Due to this, alloying of plating at the concentrated Mn parts is promoted by the mechanism shown in FIGS. 1 and 2. Even if the plating layer is formed thick, the interval between parts where the plating layer is formed thick is sufficiently small and dense, so plating streaking is not readily observed. As a result, the hot dip galvannealed steel sheet according to the present embodiment is excellent in plating appearance and appearance after coating.

2. Method of Production of Hot Dip Galvannealed Steel Sheet

The hot dip galvannealed steel sheet according to the present embodiment can be produced by integrated control of continuous casting, hot rolling, cold rolling, and annealing. In particular, it is important to hold the slab after continuous casting at a high temperature so as to make the Mn diffuse at the surface of the slab and make the concentrated Mn parts disperse. Below, one example of the method of production of the hot dip galvannealed steel sheet will be explained, but the method of production of the hot dip galvannealed steel sheet is not limited to the following example. For example, the method of production of the hot dip galvannealed steel sheet according to the present embodiment includes

obtaining a steel slab having the above chemical composition by continuous casting,
heating the steel slab then hot rolling it to obtain a hot rolled steel sheet,
coiling the hot rolled steel sheet,
cold rolling the hot rolled steel sheet to obtain a cold rolled steel sheet, and
annealing the cold rolled steel sheet, wherein
the method includes
when cooling the slab after continuous casting, holding at least the surface in the width direction (surface contacting rolls at the time of rolling) at 600°C or more for 240 minutes or more, and
when heating the slab before hot rolling, holding at least the surface in the width direction (surface contacting rolls at the time of rolling) at 1150°C or more and 1300°C or less for 120 minutes or more and 300 minutes or less. Below, the steps will be explained in detail focusing on the parts becoming points in the embodiments.

2.1 Cooling Step of Slab After Continuous Casting

As explained above, when cooling a steel slab after continuous casting, by holding at least the surface in the width direction (surface contacting rolls at the time of rolling) at 600°C or more 240 minutes or more, Mn will easily diffuse and concentrated Mn parts will easily disperse at the surface of the steel slab. As a result, when hot dip galvannealing the base steel sheet after rolling, plating streaking will become harder to perceive. The mode for controlling the temperature of the steel slab after continuous casting as explained above is not particularly limited. It is sufficient to control the temperature of the slab in the interval from the end of the continuous caster to the heating furnace before the hot rolling. For example, making the secondary cooling at the time of continuous casting slow cooling, adjusting the set position of the cart for conveying the slab, holding the heat of the slab by a heat holding cover, etc. are effective. As one example, slabs continuously cast by a continuous caster (CC) and conveyed by conveyor rolls are stacked in layers to form a slab stack, the slab stack is covered by a heat holding cover, and, when conveying the slabs by a cart, the cooling speed at least at the width direction surfaces of the slabs being conveyed is controlled to a 30°C/h or less low speed. Due to this, the above temperature control in the cooling step of the slabs can be achieved.

2.2 Heating Temperature and Time in Heating Furnace

As explained above, when heating the steel slab before hot rolling, by holding at least the surface in the width direction (surface contacting rolling rolls at the time of rolling) of the steel slab at 1150°C or more and 1300°C or less for 120 minutes or more and 300 minutes or less, Mn will easily diffuse and concentrated Mn parts will easily disperse at the surface of the steel slab. As a result, when hot dip galvannealing the base steel sheet after rolling, plating streaking will become harder to perceive. The mode for controlling the temperature of the steel slab before hot rolling as explained above is not particularly limited. It is sufficient to load the steel slab into the heating furnace and control the temperature of the slab by controlling the temperature in the heating furnace.

2.3 Other Steps

In the method of production according to the present embodiment, as explained above, after controlling the temperature of the steel slab from continuous casting to hot rolling, hot rolling, coiling, cold rolling, annealing, plating, etc. may be performed. The hot rolling conditions, coiling conditions, cold rolling conditions, annealing conditions, and plating conditions are not particularly limited. Below, examples of the steps will be shown.

(Finish Rolling Temperature of Hot Rolling)

When hot rolling a slab after heating, general conditions may be employed for the rough rolling conditions in the hot rolling. General conditions may also be employed for the finish rolling conditions of the hot rolling. However, the finish rolling temperature of the hot rolling is a factor having an effect on control of the texture of the base steel sheet, so it should be controlled to a predetermined temperature range. For example, the finish rolling temperature of the hot rolling may be 900°C or more and may be 950°C or less.

(Coiling Conditions)

The coiling temperature of the hot rolled steel sheet is not particularly limited. For example, it may be 500°C or more and 800°C or less.

(Rolling Reduction in Cold Rolling)

The rolling reduction in cold rolling is important from the viewpoint of obtaining a texture excellent in r-value. For example, the total of the rolling reduction in the cold rolling is desirably 70% or more and desirably 90% or less. For the purpose of lowering the cold rolling load at the time of cold rolling, the annealing may be performed at a temperature of 700°C or less.

(Annealing Atmosphere)

The annealing may be performed in a high dew point atmosphere or may be performed in a low dew point atmosphere. For example, the dew point in the annealing atmosphere may be - 60°C or more and may be 30°C or less.

(Annealing Holding Temperature)

If the heating temperature at the time of annealing is too low, the ductility of the steel sheet will easily fall. On the other hand, excessively high temperature heating not only invites a rise in costs, but also causes trouble such as inferior sheet shape at the time of high temperature running or reduced lifetime of the rolls. From the above viewpoints, the highest heating temperature at the time of annealing (annealing holding temperature) is preferably 750°C or more and preferably 900°C or less.

(Annealing Holding Time)

At the time of annealing, the steel sheet is preferably held at the above heating temperature for 5 seconds or more. If the holding time is too short, the drop in strength may be remarkable. Further, the variation in hardness may easily become greater. From these viewpoints, the holding time is more preferably 10 seconds or more. More preferably it is 20 seconds or more.

(Cooling Rate After Annealing)

The cooling conditions after the annealing are not particularly limited.

(Cooling Stop Temperature and Reheating After Annealing)

Further, after cooling after annealing, next, if the cooling stop temperature is lower than the plating bath temperature, the steel sheet may be reheated to the temperature region of 350°C to 600°C. Further, if the cooling stop temperature is excessively low, not only does a large capital investment become necessary, but also the effect becomes saturated.

(Dwell Temperature)

Furthermore, after reheating and before dipping in the plating bath, the steel sheet may be made to dwell at the temperature region of 350 to 600°C. This dwelling operation at this temperature region suppresses uneven temperature of the sheet in the width direction and improves the appearance after plating. If the cooling stop temperature after annealing was 350°C to 600°C, the dwelling may be performed without reheating.

(Dwell Time)

The dwell time is desirably 30 seconds or more or 300 seconds or less for obtaining the above effect.

(Tempering)

In the series of annealing steps, the cold rolled steel sheet or the steel sheet comprised of the cold rolled sheet plated may be reheated after being cooled down to room temperature or in the middle of cooling down to room temperature (however, Ms or less).

(Plating)

The surface of the steel sheet is formed with a hot dip galvanized layer by a hot dip galvanization step. In this case, the corrosion resistance of the cold rolled steel sheet is improved, so this is preferred. In the method of production according to the present embodiment, the surface of the sheet may be formed with a plating layer in the annealing. Alternatively, the surface of the sheet after annealing may be formed with the plating layer.

(Composition of Plating Bath)

The plating bath is comprised mainly of Zn. It is sufficient that the chemical composition of the plating layer after alloying can become the targeted range. The plating bath preferably has an effective amount of Al (value of total amount of Al in plating bath minus total amount of Fe) of 0.050 to 0.250 mass%. If the effective amount of Al in the plating bath is too small, Fe excessively penetrates the plating layer and the plating adhesion is liable to fall. On the other hand, if the effective amount of Al in the plating bath is too great, at the boundary of the steel sheet and the plating layer, Al-based oxides impeding movement of Fe atoms and Zn atoms will be formed and the alloying is liable to be unable to sufficiently proceed. The effective amount of Al in the plating bath is more preferably 0.065 mass% or more, more preferably 0.180 mass% or less.

(Steel Sheet Temperature After Entry into Plating Bath)

To alloy the hot dip galvanized layer, it is sufficient to heat the steel sheet on which the hot dip galvanized layer is formed to the temperature range of 450 to 600°C. If the alloying temperature is too low, the alloying is liable to not sufficiently proceed. On the other hand, if the alloying temperature is too high, the alloying will proceed too much and due to the formation of a Γ phase, the concentration of Fe in the plating layer will become excessive and the plating adhesion is liable to drop. The alloying temperature may be 470°C or more and may be 580°C or less. The alloying temperature has to be changed according to the chemical composition of the steel sheet, the degree of formation of internal oxides layer, etc., so the concentration of Fe in the plating layer should be confirmed while setting it. The alloying of the hot dip galvanized layer is for example performed in an alloying furnace and soaking zone. The dwell times in the alloying furnace and soaking zone may be for example 10 seconds or so in the alloying furnace and 20 seconds or so in the soaking zone and a total of 30 seconds or so. The "soaking zone" is a section for soaking so that the temperature of the steel sheet exiting from the alloying furnace does not rapidly fall.

(Post Treatment)

The surface of the hot dip galvannealed steel sheet can be treated for the purpose of improving the coatability and weldability by forming an upper layer plating or treating it in various ways such as chromate treatment, phosphate treatment, improvement of lubrication, improvement of weldability, etc.

(Skin Pass Rolling Rate)

Furthermore, skin pass rolling may be performed for the purpose of correction of the shape of the steel sheet or improving the ductility by introduction of movable dislocations. The rolling reduction of the skin pass rolling after heat treatment is preferably 0.1 to 1.5% in range. If less than 0.1%, the effect becomes small and control is difficult. This becomes the lower limit. If more than 1.5%, the productivity remarkably falls, so this is made the upper limit. The skin pass may be performed in-line or may be performed off line. Further, the skin pass at the target rolling reduction may be performed just once or may be performed divided into a plurality of operations.

Examples

Below, examples according to the present invention will be shown. The present invention is not limited to these examples of conditions. The present invention can employ various conditions so long as not departing from its gist and achieving its object.

1. Preparation of Base Steel Sheet

Steels having various chemical compositions were smelted and continuously cast to produce steel slabs. In the cooling step after the continuous casting, some of the steel slabs were stacked in layers and the slab temperature was held by a heat holding cover. Further, when conveying the slabs by carts, the cooling speed of the slabs being conveyed was controlled to a low speed of 30°C/h or less. Temperature sensors were placed on the surfaces at the centers of the steel slabs in the width direction, the temperature changes of the width direction surfaces of the steel slabs were confirmed, and the holding times at the slab cooling step at 600°C or more were measured. After cooling, each steel slab was inserted into a heated furnace and held there at a predetermined temperature for a predetermined time to homogenize it, then was taken out into the atmosphere. After that, it was hot rolled to obtain a thickness 3.2 mm hot rolled steel sheet which was then coiled up at a predetermined temperature. After that, oxide scale on the hot rolled steel sheet was removed by pickling and the steel sheet was cold rolled (rolling reduction 75%) to finish it into a sheet thickness 0.8 mm cold rolled steel sheet. Furthermore, the cold rolled steel sheet was annealed. In all of the steel sheets, the holding temperature at the time of annealing was 800°C and the holding time was 60 seconds. After annealing, each sheet was immediately plated and alloyed, then was rolled by skin pass rolling. The chemical compositions of the base steel sheets obtained by analyzing samples taken from the obtained steel sheets are as shown in the following Tables 1 and 2. Note that, the balances other than the constituents shown in Tables 1 and 2 are Fe and impurities.

[Table 1]

| No. | Constituents (%) | | | | | | | | | | | | |
|---|---|---|---|---|---|---|---|---|---|---|---|---|---|
| | C | Si | Mn | P | S | N | Ti | Nb | B | Al | Cu | Cr | Ni |
| 1 | 0.0021 | 0.30 | 1.16 | 0.072 | 0.0067 | 0.0023 | 0.100 | 0.021 | 0.0010 | 0.036 | - | - | - |
| 2 | 0.0035 | 0.42 | 1.91 | 0.092 | 0.0027 | 0.0022 | 0.100 | - | 0.0010 | 0.549 | - | - | - |
| 3 | 0.0029 | 0.31 | 1.56 | 0.036 | 0.0009 | 0.0015 | 0.100 | 0.023 | 0.0010 | 0.850 | - | - | - |
| 4 | 0.0021 | 0.30 | 1.16 | 0.072 | 0.0067 | 0.0023 | 0.100 | 0.021 | 0.0010 | 0.036 | 0.010 | - | - |
| 5 | 0.0018 | 0.31 | 1.15 | 0.071 | 0.0065 | 0.0020 | 0.100 | 0.006 | 0.0010 | 0.036 | - | 0.020 | - |
| 6 | 0.0018 | 0.31 | 1.15 | 0.071 | 0.0065 | 0.0020 | 0.100 | 0.006 | 0.0010 | 0.036 | - | - | 0.030 |
| 7 | 0.0028 | 0.31 | 1.14 | 0.072 | 0.0076 | 0.0020 | 0.053 | 0.020 | 0.0009 | 0.036 | - | - | - |
| 8 | 0.0026 | 0.11 | 1.07 | 0.093 | 0.0008 | 0.0053 | 0.100 | 0.072 | 0.0010 | 0.395 | 0.790 | - | - |
| 9 | 0.0095 | 0.23 | 1.04 | 0.071 | 0.0065 | 0.0042 | 0.100 | 0.083 | 0.0029 | 0.680 | - | 1.860 | - |
| 10 | 0.0053 | 0.05 | 1.02 | 0.098 | 0.0002 | 0.0053 | 0.100 | 0.091 | 0.0070 | 0.745 | - | - | 0.540 |
| 11 | 0.0023 | 0.42 | 0.54 | 0.079 | 0.0004 | 0.0021 | 0.100 | 0.042 | 0.0065 | 0.968 | - | - | - |
| 12 | 0.0056 | 0.16 | 1.18 | 0.072 | 0.0044 | 0.0024 | 0.040 | 0.084 | 0.0010 | 0.142 | - | - | - |
| 13 | 0.0055 | 0.43 | 1.25 | 0.043 | 0.0006 | 0.0024 | 0.040 | 0.085 | 0.0005 | 0.241 | - | - | - |
| 14 | 0.0028 | 0.15 | 1.03 | 0.082 | 0.0096 | 0.0042 | 0.050 | 0.022 | 0.0025 | 0.377 | - | - | - |
| 15 | 0.0032 | 0.06 | 1.02 | 0.092 | 0.0073 | 0.0035 | 0.040 | 0.096 | 0.0011 | 0.325 | - | - | - |
| 16 | 0.0031 | 0.27 | 0.44 | 0.091 | 0.0092 | 0.0026 | 0.090 | 0.005 | 0.0011 | 0.047 | - | - | - |
| 17 | 0.0043 | 0.22 | 0.86 | 0.082 | 0.0092 | 0.0024 | 0.040 | 0.026 | 0.0011 | 0.341 | - | - | - |
| 18 | 0.0032 | 0.33 | 0.42 | 0.093 | 0.0079 | 0.0023 | 0.070 | 0.024 | 0.0010 | 0.570 | - | - | - |
| 19 | 0.0046 | 0.14 | 1.13 | 0.083 | 0.0083 | 0.0032 | 0.060 | 0.034 | 0.0025 | 0.715 | - | - | - |
| 20 | 0.0010 | 0.21 | 0.53 | 0.091 | 0.0075 | 0.0030 | 0.060 | 0.087 | 0.0010 | 0.271 | - | - | - |
| 21 | 0.0022 | 0.13 | 1.26 | 0.085 | 0.0043 | 0.0032 | 0.060 | 0.037 | 0.0055 | 0.188 | - | - | - |
| 22 | 0.0043 | 0.45 | 1.27 | 0.042 | 0.0017 | 0.0024 | 0.050 | 0.017 | 0.0021 | 0.945 | - | - | - |
| 23 | 0.0054 | 0.12 | 1.22 | 0.073 | 0.0087 | 0.0024 | 0.050 | 0.083 | 0.0010 | 0.380 | - | - | - |
| 24 | 0.0021 | 0.45 | 1.96 | 0.092 | 0.0024 | 0.0191 | 0.100 | 0.001 | 0.0044 | 0.851 | 0.141 | 0.131 | 0.340 |
| 25 | 0.0020 | 0.48 | 1.28 | 0.100 | 0.0044 | 0.0019 | 0.100 | 0.021 | 0.0005 | 0.027 | 0.020 | 0.010 | 0.012 |

(continued)

| No. | Constituents (%) | | | | | | | | | | | | |
|---|---|---|---|---|---|---|---|---|---|---|---|---|---|
| | C | Si | Mn | P | S | N | Ti | Nb | B | Al | Cu | Cr | Ni |
| 26 | 0.0022 | 0.47 | 1.95 | 0.090 | 0.0049 | 0.0018 | 0.100 | 0.020 | 0.0010 | 0.034 | 0.014 | 0.012 | 0.017 |
| 27 | 0.0028 | 0.31 | 1.14 | 0.072 | 0.0076 | 0.0020 | 0.053 | 0.020 | 0.0009 | 0.036 | - | - | - |
| 28 | 0.0020 | 0.48 | 1.28 | 0.100 | 0.0044 | 0.0019 | 0.100 | 0.021 | 0.0005 | 0.027 | 0.020 | 0.010 | 0.012 |
| 29 | 0.0022 | 0.47 | 1.95 | 0.090 | 0.0049 | 0.0018 | 0.100 | 0.020 | 0.0010 | 0.034 | 0.014 | 0.012 | 0.017 |
| 30 | 0.0098 | 0.33 | 1.15 | 0.073 | 0.0090 | 0.0052 | 0.100 | 0.027 | 0.0019 | 0.387 | - | - | - |
| 31 | 0.0150 | 0.31 | 1.13 | 0.072 | 0.0077 | 0.0022 | 0.100 | 0.021 | 0.0009 | 0.035 | 0.017 | 0.016 | 0.014 |
| 32 | 0.0022 | 0.70 | 1.95 | 0.090 | 0.0049 | 0.0018 | 0.100 | 0.020 | 0.0010 | 0.034 | 0.0194 | 0.016 | 0.0155 |
| 33 | 0.0022 | 0.47 | 2.50 | 0.090 | 0.0049 | 0.0018 | 0.100 | 0.020 | 0.0010 | 0.034 | 0.0151 | 0.0179 | 0.0124 |
| 34 | 0.0023 | 0.30 | 1.15 | 0.125 | 0.0072 | 0.0024 | 0.100 | 0.021 | 0.0010 | 0.036 | 0.0111 | 0.0162 | 0.0183 |
| 35 | 0.0022 | 0.47 | 1.95 | 0.090 | 0.0160 | 0.0018 | 0.100 | 0.020 | 0.0010 | 0.034 | 0.0147 | 0.0129 | 0.0168 |
| 36 | 0.0022 | 0.46 | 1.90 | 0.090 | 0.0049 | 0.0018 | 0.030 | 0.020 | 0.0010 | 0.034 | 0.017 | 0.0113 | 0.015 |
| 37 | 0.0021 | 0.30 | 1.16 | 0.072 | 0.0067 | 0.0023 | 0.100 | 0.021 | 0.0002 | 0.036 | 0.019 | 0.0199 | 0.0149 |
| 38 | 0.0022 | 0.47 | 1.95 | 0.090 | 0.0049 | 0.0018 | 0.100 | 0.020 | 0.0120 | 0.034 | 0.0121 | 0.0119 | 0.0129 |
| 39 | 0.0020 | 0.45 | 1.96 | 0.094 | 0.0047 | 0.0017 | 0.240 | 0.022 | 0.0008 | 0.037 | 0.021 | 0.013 | 0.015 |

[Table 2]

| No. | Constituent (%) | | | | | | | | | | | | |
|---|---|---|---|---|---|---|---|---|---|---|---|---|---|
| | Mo | W | V | O | Ta | Co | Sn | Sb | As | Mg | Zr | Ca | REM |
| 1 | - | - | - | - | - | - | - | - | - | - | - | - | - |
| 2 | - | - | - | - | - | - | - | - | - | - | - | - | - |
| 3 | - | - | - | - | - | - | - | - | - | - | - | - | - |
| 4 | - | - | - | - | - | - | - | - | - | - | - | - | - |
| 5 | - | - | - | - | - | - | - | - | - | - | - | - | - |
| 6 | - | - | - | - | - | - | - | - | - | - | - | - | - |
| 7 | 0.010 | - | - | - | - | - | - | - | - | - | - | - | - |
| 8 | - | - | - | - | - | - | - | - | - | - | - | - | - |
| 9 | - | - | - | - | - | - | - | - | - | - | - | - | - |
| 10 | - | - | - | - | - | - | - | - | - | - | - | - | - |
| 11 | 2.680 | - | - | - | - | - | - | - | - | - | - | - | - |
| 12 | - | 0.095 | - | - | - | - | - | - | - | - | - | - | - |
| 13 | - | - | 0.920 | - | - | - | - | - | - | - | - | - | - |
| 14 | - | - | - | 0.017 | - | - | - | - | - | - | - | - | - |
| 15 | - | - | - | - | 0.088 | - | - | - | - | - | - | - | - |
| 16 | - | - | - | - | - | 2.750 | - | - | - | - | - | - | - |
| 17 | - | - | - | - | - | - | 0.680 | - | - | - | - | - | - |
| 18 | - | - | - | - | - | - | - | 0.450 | - | - | - | - | - |
| 19 | - | - | - | - | - | - | - | - | 0.034 | - | - | - | - |
| 20 | - | - | - | - | - | - | - | - | - | 0.027 | - | - | - |
| 21 | - | - | - | - | - | - | - | - | - | - | 0.047 | - | - |
| 22 | - | - | - | - | - | - | - | - | - | - | - | 0.0487 | - |
| 23 | - | - | - | - | - | - | - | - | - | - | - | - | 0.0495 |
| 24 | 0.510 | 0.033 | 0.278 | 0.003 | 0.025 | 0.127 | 0.196 | 0.141 | 0.038 | 0.024 | 0.025 | 0.0214 | 0.0352 |
| 25 | - | - | - | - | - | - | - | - | - | - | - | - | - |
| 26 | - | - | - | - | - | - | - | - | - | - | - | - | - |
| 27 | 0.010 | - | - | - | - | - | - | - | - | - | - | - | - |
| 28 | - | - | - | - | - | - | - | - | - | - | - | - | - |
| 29 | - | - | - | - | - | - | - | - | - | - | - | - | - |
| 30 | - | - | - | - | - | - | - | - | - | - | - | - | - |
| 31 | - | - | - | - | - | - | - | - | - | - | - | - | - |
| 32 | - | - | - | - | - | - | - | - | - | - | - | - | - |
| 33 | - | - | - | - | - | - | - | - | - | - | - | - | - |
| 34 | - | - | - | - | - | - | - | - | - | - | - | - | - |
| 35 | - | - | - | - | - | - | - | - | - | - | - | - | - |
| 36 | - | - | - | - | - | - | - | - | - | - | - | - | - |
| 37 | - | - | - | - | - | - | - | - | - | - | - | - | - |
| 38 | - | - | - | - | - | - | - | - | - | - | - | - | - |

(continued)

| No. | Constituent (%) | | | | | | | | | | | | |
|-----|----|---|---|---|----|----|----|----|----|----|----|----|-----|
|     | Mo | W | V | O | Ta | Co | Sn | Sb | As | Mg | Zr | Ca | REM |
| 39  | -  | - | - | - | -  | -  | -  | -  | -  | -  | -  | -  | -   |

2. Plating

Each steel sheet was hot dip galvanized, then alloyed. In the hot dip galvanization step, the steel sheet was dipped in a 450°C hot dip galvanization bath for 5 seconds. After that, it was alloyed at 590°C and was cooled from the alloying temperature down to room temperature to obtain hot dip galvannealed steel sheet. The plating of the base steel sheet can be performed by the same equipment and line as the annealing.

3. Evaluation

3.1 Properties of Base Steel Sheet

For the hot dip galvannealed steel sheet, 15 mass% hydrochloric acid containing an inhibitor was used to dissolve away the plating layer and expose the surface of the base steel sheet. After that, mapping for Mn was performed by EPMA. The standard deviation SD and the interval I were found as in the following Conditions 1 and 2

Condition 1: As shown in FIG. 3, the EPMA is utilized to divide a 2 mm square region at a surface of the base steel sheet into a 400 x 400 plurality of areas for elemental mapping and identify the Mn intensities at the individual areas. The standard deviation SD is found from the distribution of the number of detection points of the Mn intensities at the square region.

Condition 2: As shown in FIG. 4, the EPMA is utilized to divide a 2 mm square region at a surface of the base steel sheet into a 400 x 400 plurality of areas for elemental mapping and identify the Mn intensities at the individual areas. The average value $MI_{ave}$ of the Mn intensities at the square region is identified. The square region is divided into 400 regions in the direction perpendicular to the rolling direction to obtain 400 divided regions. Among these divided regions, those with 50% or more areas exhibiting Mn intensities 34% or more higher than the average value $MI_{ave}$ are defined as "first regions". Among these divided regions, those with 50% or more areas exhibiting Mn intensities 34% or more lower than the average value $MI_{ave}$ are defined as "second regions". The interval I of first regions adjoining each other across second regions in the square region is found.

3.2 Mechanical Properties

The yield point (YP), tensile strength (TS), total elongation (EL), and average r-value of the hot dip galvannealed steel sheet were measured. The measurement conditions were as explained above.

3.3 Plateability

3.3.1 Wettability

The wettability of the plating at the time of plating the base steel sheet was evaluated by the following criteria:

    Good: Wettability good (in visual observation, 100% of surface of base steel sheet deemed to be plated)
    Poor: Wettability poor (in visual observation, parts of surface of base steel sheet deemed not to be plated)

3.3.2 Occurrence of Plating Streaking

The appearance of the hot dip galvannealed steel sheet was visually observed and the degree of perception of plating streaking was evaluated in accordance with the following evaluation criteria:

    Very good: No plating streaking can be visually confirmed.
    Good: No plating streaking can be visually confirmed at position 50 cm from steel sheet.
    Fair: Plating streaking can be visually confirmed at position 50 cm from steel sheet, but no plating streaking can be visually confirmed at position 100 cm away.
    Poor: Plating streaking can be visually confirmed even at position 100 cm away from steel sheet.

3.4 Shape/Workability

3.4.1 Adhesion of Plating on Die

The hot dip galvannealed steel sheet was press-formed (condition: cylindrical deep drawing) and evaluated for the presence of adhesion of the plating to the die by the following criteria:

Good: Almost no adhesion of plating to die
Poor: Much adhesion of plating to die

3.4.2 Secondary Work Embrittlement

The hot dip galvannealed steel sheet was cylindrically deep drawn and was cooled at 0°C for 5 minutes or more, then was crushed by a press and evaluated for any secondary work embrittlement by the following criteria:

Good: No secondary work embrittlement (crack length after pressing less than 10 mm)
Poor: Secondary work embrittlement embrittlement (crack length after pressing 10 mm or more)

4. Results

Table 3 shows the production condition of the base steel sheet, the properties of the hot dip galvannealed steel sheet, the mechanical properties, and the results of evaluation of the plateability and the shape/workability.

[Table 3]

| No | Production conditions | | | | | | Mn distribution | | Mechanical properties | | | Plating/appearance | | Shape/workability | | Remarks |
|---|---|---|---|---|---|---|---|---|---|---|---|---|---|---|---|---|
| | 600°C or more holding time [min] | Heating temp. of slab before hot rolling [°C] | Heating time of slab before hot rolling [min] | Hot rolling finish temp. [°C] | Coiling temp. [°C] | Annealing temp. [°C] | Standard deviation SD | Interval I [μm] | YP | TS | EL | Wettability | Streaking | Adhesion of plating at die | Secondary work embrittlement | |
| 1 | 250 | 1300 | 240 | 920 | 700 | 800 | 0.31 | 35 | 241 | 462 | 36 | Good | Very good | Good | Good | Ex. |
| 2 | 250 | 1300 | 240 | 920 | 700 | 800 | 0.35 | 38 | 235 | 521 | 31 | Good | Good | Good | Good | Ex. |
| 3 | 250 | 1300 | 240 | 920 | 700 | 800 | 0.32 | 37 | 242 | 491 | 33 | Good | Good | Good | Good | Ex. |
| 4 | 250 | 1200 | 180 | 920 | 700 | 800 | 0.36 | 45 | 210 | 460 | 36 | Good | Good | Good | Good | Ex. |
| 5 | 300 | 1200 | 130 | 920 | 700 | 800 | 0.33 | 35 | 237 | 453 | 37 | Good | Very good | Good | Good | Ex. |
| 6 | 250 | 1200 | 180 | 920 | 700 | 800 | 0.37 | 40 | 230 | 462 | 35 | Good | Good | Good | Good | Ex. |
| 7 | 250 | 1150 | 240 | 920 | 700 | 800 | 0.35 | 45 | 263 | 454 | 35 | Good | Good | Good | Good | Ex. |
| 8 | 250 | 1200 | 180 | 920 | 700 | 800 | 0.38 | 41 | 211 | 444 | 33 | Good | Good | Good | Good | Ex. |
| 9 | 250 | 1200 | 180 | 920 | 700 | 800 | 0.39 | 45 | 205 | 463 | 30 | Good | Good | Good | Good | Ex. |
| 10 | 250 | 1200 | 180 | 920 | 700 | 800 | 0.34 | 45 | 203 | 433 | 33 | Good | Good | Good | Good | Ex. |
| 11 | 250 | 1200 | 180 | 920 | 700 | 800 | 0.38 | 35 | 211 | 470 | 29 | Good | Good | Good | Good | Ex. |
| 12 | 250 | 1200 | 180 | 920 | 700 | 800 | 0.35 | 35 | 206 | 454 | 31 | Good | Very good | Good | Good | Ex. |
| 13 | 250 | 1200 | 180 | 920 | 700 | 800 | 0.33 | 40 | 220 | 451 | 32 | Good | Very good | Good | Good | Ex. |
| 14 | 250 | 1200 | 180 | 920 | 700 | 800 | 0.37 | 45 | 206 | 456 | 32 | Good | Good | Good | Good | Ex. |
| 15 | 250 | 1200 | 180 | 920 | 700 | 800 | 0.35 | 40 | 233 | 453 | 33 | Good | Good | Good | Good | Ex. |
| 16 | 250 | 1200 | 180 | 920 | 700 | 800 | 0.36 | 40 | 232 | 453 | 30 | Good | Good | Good | Good | Ex. |
| 17 | 250 | 1200 | 180 | 920 | 700 | 800 | 0.39 | 35 | 235 | 455 | 32 | Good | Good | Good | Good | Ex. |
| 18 | 250 | 1200 | 180 | 920 | 700 | 800 | 0.33 | 40 | 208 | 448 | 32 | Good | Good | Good | Good | Ex. |
| 19 | 250 | 1200 | 180 | 920 | 700 | 800 | 0.31 | 35 | 208 | 445 | 32 | Good | Very good | Good | Good | Ex. |
| 20 | 250 | 1200 | 180 | 920 | 700 | 800 | 0.38 | 40 | 207 | 440 | 32 | Good | Good | Good | Good | Ex. |
| 21 | 250 | 1200 | 180 | 920 | 700 | 800 | 0.37 | 35 | 235 | 458 | 33 | Good | Good | Good | Good | Ex. |
| 22 | 250 | 1200 | 180 | 920 | 700 | 800 | 0.32 | 30 | 244 | 460 | 33 | Good | Very good | Good | Good | Ex. |
| 23 | 250 | 1200 | 180 | 920 | 700 | 800 | 0.38 | 35 | 205 | 453 | 33 | Good | Good | Good | Good | Ex. |
| 24 | 250 | 1200 | 180 | 920 | 700 | 800 | 0.30 | 30 | 371 | 532 | 32 | Good | Very good | Good | Good | Ex. |
| 25 | 250 | 1200 | 180 | 920 | 700 | 800 | 0.37 | 50 | 358 | 507 | 30 | Good | Good | Good | Good | Ex. |

(continued)

| No | Production conditions | | | | | | Mn distribution | | Mechanical properties | | | Plating/appearance | | Shape/workability | | Remarks |
|---|---|---|---|---|---|---|---|---|---|---|---|---|---|---|---|---|
| | 600°C or more holding time [min] | Heating temp. of slab before hot rolling [°C] | Heating time of slab before hot rolling [min] | Hot rolling finish temp. [°C] | Coiling temp. [°C] | Annealing temp. [°C] | Standard deviation SD | Interval I [μm] | YP | TS | EL | Wettability | Streaking | Adhesion of plating at die | Secondary work embrittlement | |
| 26 | 250 | 1200 | 240 | 920 | 700 | 800 | 0.35 | 30 | 372 | 532 | 28 | Good | Very good | Good | Good | Ex. |
| 27 | 200 | 1200 | 240 | 920 | 700 | 800 | 0.41 | 35 | 263 | 454 | 35 | Good | Fair | Good | Good | Comp. ex. |
| 28 | 250 | 1100 | 180 | 920 | 700 | 800 | 0.35 | 70 | 358 | 507 | 30 | Good | Fair | Good | Good | Comp. ex. |
| 29 | 250 | 1100 | 90 | 920 | 700 | 800 | 0.54 | 150 | 372 | 532 | 28 | Good | Poor | Good | Good | Comp. ex. |
| 30 | 250 | 1200 | 90 | 920 | 700 | 800 | 0.42 | 60 | 194 | 454 | 31 | Good | Fair | Good | Good | Comp. ex. |
| 31 | 250 | 1300 | 240 | 920 | 700 | 800 | 0.32 | 35 | 309 | 451 | 38 | Good | Very good | Poor | Good | Comp. ex. |
| 32 | 250 | 1200 | 180 | 920 | 700 | 800 | 0.34 | 40 | 394 | 554 | 27 | Poor | Good | Poor | Good | Comp. ex. |
| 33 | 300 | 1200 | 130 | 920 | 700 | 800 | 0.34 | 35 | 392 | 560 | 24 | Good | Very good | Good | Good | Comp. ex. |
| 34 | 250 | 1200 | 180 | 920 | 700 | 800 | 0.36 | 35 | 255 | 501 | 36 | Good | Good | Poor | Good | Comp. ex. |
| 35 | 250 | 1150 | 240 | 920 | 700 | 800 | 0.35 | 40 | 369 | 529 | 28 | Good | Good | Good | Poor | Comp. ex. |
| 36 | 250 | 1200 | 180 | 920 | 700 | 800 | 0.39 | 45 | 367 | 527 | 28 | Good | Good | Poor | Good | Comp. ex. |
| 37 | 250 | 1200 | 240 | 920 | 700 | 800 | 0.35 | 35 | 240 | 461 | 30 | Good | Very good | Good | Poor | Comp. ex. |
| 38 | 200 | 1200 | 240 | 920 | 700 | 800 | 0.41 | 40 | 372 | 532 | 28 | Good | Fair | Poor | Good | Comp. ex. |
| 39 | 250 | 1200 | 240 | 920 | 700 | 800 | 0.30 | 35 | 384 | 411 | 41 | Good | Very good | Good | Good | Comp. ex. |

Note that, the hot dip galvannealed steel sheets according to Nos. 1 to 39 all had microstructures of the base steel sheets satisfying, by area ratio, ferrite: 94 to 100%, martensite and bainite in total: 0 to 4%, and retained austenite: 0 to 2%. Further, the hot dip galvannealed steel sheet according to Nos. 1 to 39 all had chemical compositions of the plating layers satisfying, by mass%, Fe: 5 to 25%, Al: 0 to 1.0%, Si: 0 to 1.0%, Mg: 0 to 1.0%, Mn: 0 to 1.0%, Ni: 0 to 1.0%, Sb: 0 to 1.0%, and a balance: Zn and impurities.

From the results shown in Table 3, the following will be understood:

Regarding No. 27, when cooling the slab, the holding time at 600°C or more was too short, so Mn could not be sufficiently diffused and dispersed at the slab surface, the variation in distribution (standard deviation SD) of Mn at the surface of the base steel sheet after rolling and annealing became large, and clear streaking occurred at the hot dip galvannealed layer.

Regarding No. 28, the heating temperature before hot rolling the slab was too low, so Mn could not be sufficiently diffused and dispersed at the slab surface, the interval I of concentrated Mn parts at the surface of the base steel sheet after rolling and annealing could not be sufficiently narrowed, and clear streaking occurred at the hot dip galvannealed layer.

Regarding No. 29, the heating temperature before hot rolling the slab was too low and the heating holding time also as too short, so Mn could not be sufficiently diffused and dispersed at the slab surface, the variation in distribution (standard deviation SD) of Mn at the surface of the base steel sheet after rolling and annealing became large, the interval I of concentrated Mn parts could not be sufficiently narrowed, and clear streaking occurred at the hot dip galvannealed layer.

Regarding No. 30, the heating holding time before hot rolling the slab as too short, so Mn could not be sufficiently diffused and dispersed at the slab surface, the variation in distribution (standard deviation SD) of Mn at the surface of the base steel sheet after rolling and annealing became large, the interval I of concentrated Mn parts could not be sufficiently narrowed, and clear streaking occurred at the hot dip galvannealed layer.

Regarding No. 31, the C content at the base steel sheet was too great, so at the base steel sheet, it is believed the amount of dissolved C remaining without being fixed by the Ti and Nb became great. As a result, alloying of the plating was impeded and at the plated steel sheet, nonalloyed plating parts formed and adhesion of the plating to the die became easier to occur.

Regarding No. 32, the Si content at the base steel sheet was too great, so it is believed that the wettability of the plating on the base steel sheet deteriorated. Further, it is believed that due to the Si, alloying of the plating was impeded. As a result, the number of nonalloyed plating parts at the plated steel sheet increased and, at the time of press-forming, the nonalloyed plating parts adhered to the die and the shapeability and productivity were detracted from.

Regarding No. 33, the Mn content at the base steel sheet was too great, so the elongation tended to fall.

Regarding No. 34, the P content at the base steel sheet was too great, so it is believed alloying of the plating was impeded. As a result, nonalloyed plating parts increased at the plated steel sheet and, at the time of press-forming, the nonalloyed plating parts adhered to the die detracting from the shapeability and productivity.

Regarding No. 35, the S content at the base steel sheet was too great, so secondary work embrittlement occurred due to segregation at the grain boundaries of the base steel sheet.

Regarding No. 36, the Ti content at the base steel sheet was too small, so it is believed that the C was insufficiently fixed at the base steel sheet and alloying of the plating was impeded by the dissolved C. As a result, nonalloyed plating parts formed at the plated steel sheet and adhesion of the plating at the die easily occurred.

Regarding No. 37, the B content at the base steel sheet was too small, so the function of C removed from the grain boundaries could not be sufficiently complemented and secondary work embrittlement occurred.

Regarding No. 38, the B content at the base steel sheet was too great, so it is believed that alloying of the plating was impeded. As a result, nonalloyed plating parts increased at the plated steel sheet and, at the time of press-forming, the nonalloyed plating parts adhered to the die detracting from the shapeability and productivity. Further, when cooling the slab, the holding time at 600°C or more was too short, so Mn could not be sufficiently diffused and dispersed at the slab surface, the variation in distribution (standard deviation SD) of Mn at the surface of the base steel sheet after rolling and annealing became large, and clear streaking occurred at the hot dip galvannealed layer.

Regarding No. 39, the Ti content in the base steel sheet was too great, so the plated steel sheet was inferior in the balance of strength and ductility.

As opposed to this, regarding each of Nos. 1 to 26, it was possible to keep down the occurrence of plating streaking in the hot dip galvannealed steel sheet and, further, possible to satisfy the mechanical properties and shapeability and other properties tending to be sought from hot dip galvannealed steel sheet.

Summarizing the above results, the following hot dip galvannealed steel sheet can be said to be resistant to plating streaking and excellent in appearance. Further, it can be said to satisfy the mechanical properties and shapeability and other properties tending to be sought from the hot dip galvannealed steel sheet.

A hot dip galvannealed steel sheet, having a base steel sheet and a plating layer, wherein

the base steel sheet has a chemical composition containing, by mass%,

C: 0.0005 to 0.0100%,
Si: 0.01 to 0.50%,
Mn: 0.01 to 2.00%,
P: 0.100% or less,
S: 0.0100% or less,
N: 0.0200% or less,
Ti: 0.040 to 0.180%,
Nb: 0 to 0.100%,
B: 0.0005 to 0.0100%,
Al: 0 to 1.000%,
Cu: 0 to 1.000%,
Cr: 0 to 2.000%,
Ni: 0 to 0.500%,
Mo: 0 to 3.000%,
W: 0 to 0.100%,
V: 0 to 1.000%,
O: 0 to 0.020%,
Ta: 0 to 0.100%,
Co: 0 to 3.000%,
Sn: 0 to 1.000%,
Sb: 0 to 0.500%,
As: 0 to 0.050%,
Mg: 0 to 0.050%,
Zr: 0 to 0.050%,
Ca: 0 to 0.0500%,
REM: 0 to 0.0500% and
a balance of Fe and impurities,

a standard deviation SD found under the above Condition 1 is 0.40 or less, and
an interval I found under the above Condition 2 is 50 $\mu$m or less.

## Claims

1. A hot dip galvannealed steel sheet, having a base steel sheet and a plating layer, wherein

the base steel sheet has a chemical composition containing, by mass%,

C: 0.0005 to 0.0100%,
Si: 0.01 to 0.50%,
Mn: 0.01 to 2.00%,
P: 0.100% or less,
S: 0.0100% or less,
N: 0.0200% or less,
Ti: 0.040 to 0.180%,
Nb: 0 to 0.100%,
B: 0.0005 to 0.0100%,
Al: 0 to 1.000%,
Cu: 0 to 1.000%,
Cr: 0 to 2.000%,
Ni: 0 to 0.500%,
Mo: 0 to 3.000%,
W: 0 to 0.100%,
V: 0 to 1.000%,
O: 0 to 0.020%,
Ta: 0 to 0.100%,
Co: 0 to 3.000%,
Sn: 0 to 1.000%,

Sb: 0 to 0.500%,
As: 0 to 0.050%,
Mg: 0 to 0.050%,
Zr: 0 to 0.050%,
Ca: 0 to 0.0500%,
REM: 0 to 0.0500%, and
a balance of Fe and impurities,

a standard deviation SD found under the following Condition 1 is 0.40 or less, and
an interval I found under the following Condition 2 being 50 μm or less:

Condition 1: An electron probe microanalyzer, EPMA, is utilized to divide a 2 mm square region at a surface of the base steel sheet into a 400 x 400 plurality of areas for elemental mapping and identify the Mn intensities at the individual areas, and the standard deviation SD is found from the distribution of the number of detection points of the Mn intensities at the square region;

Condition 2: An electron probe microanalyzer, EPMA, is utilized to divide a 2 mm square region at a surface of the base steel sheet into a 400 x 400 plurality of areas for elemental mapping and identify the Mn intensities at the individual areas, the average value $MI_{ave}$ of the Mn intensities at the square region is identified; the square region is divided into 400 regions in the direction perpendicular to the rolling direction to obtain 400 divided regions, among these divided regions, those with 50% or more areas exhibiting Mn intensities 34% or more higher than the average value $MI_{ave}$ are defined as "first regions", among these divided regions, those with 50% or more areas exhibiting Mn intensities 34% or more lower than the average value $MI_{ave}$ are defined as "second regions", and the interval I of first regions adjoining each other across second regions in the square region is found, wherein if in one EPMA mapping the first region and second region are repeatedly present and a plurality of intervals I are identified, the largest interval among the plurality of intervals I need only be 50 μm or less and if there are no first regions or second regions present in the EPMA mapping, the interval I is deemed to be 0 μm.

2. The hot dip galvannealed steel sheet according to claim 1, wherein

the chemical composition contains, by mass%,
Mn: 0.01 to 1.30% or 1.70 to 2.00%.

3. The hot dip galvannealed steel sheet according to claim 1 or 2, wherein
the chemical composition contains by mass% at least one element selected from the group consisting of:

Nb: 0.001 to 0.100%,
Al: 0.001 to 1.000%,
Cu: 0.001 to 1.000%,
Cr: 0.001 to 2.000%,
Ni: 0.001 to 0.500%,
Mo: 0.001 to 3.000%,
W: 0.001 to 0.100%,
V: 0.001 to 1.000%,
O: 0.001 to 0.020%,
Ta: 0.001 to 0.100%,
Co: 0.001 to 3.000%,
Sn: 0.001 to 1.000%,
Sb: 0.001 to 0.500%,
As: 0.001 to 0.050%,
Mg: 0.001 to 0.050%,
Zr: 0.001 to 0.050%,
Ca: 0.0001 to 0.0500%, and
REM: 0.0001 to 0.0500%.

4. The hot dip galvannealed steel sheet according to any one of claims 1 to 3, wherein

the microstructure of the base steel sheet is, by area ratio:

ferrite: 94 to 100%,
martensite and bainite in total: 0 to 4%, and
retained austenite: 0 to 2%,

wherein the microstructure is determined as specified in the description.

5. The hot dip galvannealed steel sheet according to any one of claims 1 to 4, wherein the chemical composition of the plating layer contains, by mass%,

Fe: 5 to 25%,
Al: 0 to 1.0%,
Si: 0 to 1.0%,
Mg: 0 to 1.0%,
Mn: 0 to 1.0%,
Ni: 0 to 1.0%,
Sb: 0 to 1.0%, and
balance: Zn and impurities.

**Patentansprüche**

1. Ein feuerverzinktes und wärmebehandeltes Stahlblech mit einem Basis-Stahlblech und einer Plattierungsschicht, wobei

das Basis-Stahlblech eine chemische Zusammensetzung aufweist, enthaltend, in Massen-%,

C: 0,0005 bis 0,0100%,
Si: 0,01 bis 0,50%,
Mn: 0,01 bis 2,00%,
P: 0,100% oder weniger,
S: 0,0100% oder weniger,
N: 0,0200% oder weniger,
Ti: 0,040 bis 0,180%,
Nb: 0 bis 0,100%,
B: 0,0005 bis 0,0100%,
Al: 0 bis 1,000%,
Cu: 0 bis 1,000%,
Cr: 0 bis 2,000%,
Ni: 0 bis 0,500%,
Mo: 0 bis 3,000%,
W: 0% bis 0,100%,
V: 0 bis 1,000%,
O: 0 bis 0,020%,
Ta: 0 bis 0,100%,
Co: 0 bis 3,000%,
Sn: 0 bis 1,000%,
Sb: 0 bis 0,500%,
As: 0 bis 0,050%,
Mg: 0 bis 0,050%,
Zr: 0 bis 0,050%,
Ca: 0 bis 0,0500%,
REM: 0 bis 0,0500%, und
einen Rest an Fe und Verunreinigungen,

eine unter der folgenden Bedingung 1 ermittelte Standardabweichung SD 0,40 oder weniger beträgt, und ein unter der folgenden Bedingung 2 ermitteltes Intervall I 50 $\mu$m oder weniger beträgt:

Bedingung 1: unter Verwendung einer Elektronenstrahlmikrosonde, EPMA, wird ein 2 mm großer quadrati-

26

scher Bereich auf einer Oberfläche des Basis-Stahlblechs in eine 400 × 400 Mehrzahl von Bereichen unterteilt, um Element-Mapping durchzuführen, und die Mn-Intensitäten in den einzelnen Bereichen zu ermitteln, und die Standardabweichung SD wird aus der Verteilung der Anzahl der Messpunkte der Mn-Intensitäten in diesem quadratischen Bereich ermittelt;

Bedingung 2: unter Verwendung einer Elektronenstrahlmikrosonde, EPMA, wird ein 2 mm großer quadratischer Bereich auf einer Oberfläche des Basis-Stahlblechs in eine 400 × 400 Mehrzahl von Bereichen unterteilt, um Element-Mapping durchzuführen, und die Mn-Intensitäten in den einzelnen Bereichen zu ermitteln, der Durchschnittswert $MI_{ave}$ der Mn-Intensitäten in dem quadratischen Bereich wird ermittelt; der quadratische Bereich wird in Richtung senkrecht zur Walzrichtung in 400 Bereiche unterteilt, um 400 unterteilte Bereiche zu erhalten, unter diesen unterteilten Bereichen werden diejenigen, bei denen 50% oder mehr der Bereiche Mn-Intensitäten aufweisen, die 34% oder mehr über dem Durchschnittswert $MI_{ave}$ liegen, als "erste Bereiche" definiert, unter diesen unterteilten Bereichen werden diejenigen, bei denen 50% oder mehr der Bereiche Mn-Intensitäten aufweisen, bei denen 34% oder mehr unter dem Durchschnittswert $MI_{ave}$ liegen, als "zweite Bereiche" definiert, und das Intervall I der ersten Bereiche, welche über die zweiten Bereiche in dem quadratischen Bereich hinweg aneinandergrenzen wird ermittelt, wobei, wenn in einer Element-Mapping der erste Bereich und der zweite Bereich wiederholt vorkommen und eine Mehrzahl an Intervallen I ermittelt werden, das größte Intervall unter der Mehrzahl an Intervallen I nur 50 $\mu$m oder weniger betragen muss, und wenn in der Element-Mapping keine ersten Bereiche oder zweiten Bereiche vorhanden sind, wird das Intervall I als 0 $\mu$m angesehen.

2. Das feuerverzinkte und wärmebehandelte Stahlblech gemäß Anspruch 1, wobei die chemische Zusammensetzung enthält, in Massen-%,
Mn: 0,01 bis 1,30% oder 1,70 bis 2,00%.

3. Das feuerverzinkte und wärmebehandelte Stahlblech gemäß Anspruch 1 oder 2, wobei die chemische Zusammensetzung, in Massen-%, mindestens ein Element enthält, ausgewählt aus der Gruppe bestehend aus:

Nb: 0,001 bis 0,100%,
Al: 0,001 bis 1,000%,
Cu: 0,001 bis 1,000%,
Cr: 0,001 bis 2,000%,
Ni: 0,001 bis 0,500%,
Mo: 0,001 bis 3,000%,
W: 0,001% bis 0,100%,
V: 0,001 bis 1,000%,
O: 0,001 bis 0,020%,
Ta: 0,001 bis 0,100%,
Co: 0,001 bis 3,000%,
Sn: 0,001 bis 1,000%,
Sb: 0,001% bis 0,500%,
As: 0,001% bis 0,050%,
Mg: 0,001 bis 0,050%,
Zr: 0,001 bis 0,050%,
Ca: 0,0001 bis 0,0500%, und
REM: 0,0001 bis 0,0500%.

4. Das feuerverzinkte und wärmebehandelte Stahlblech gemäß einem der Ansprüche 1 bis 3, wobei

die Mikrostruktur des Basis-Stahlblechs beträgt, in einem Flächenverhältnis:

Ferrit: 94 bis 100%,
Martensit und Bainit insgesamt: 0 bis 4%, und
Restaustenit: 0 bis 2%,

wobei die Mikrostruktur wie in der Beschreibung angegeben bestimmt wird.

5. Das feuerverzinkte und wärmebehandelte Stahlblech gemäß einem der Ansprüche 1 bis 4, wobei
die chemische Zusammensetzung der Plattierungsschicht enthält, in Massen-%,

Fe: 5 bis 25%,
Al: 0 bis 1,0%,
Si: 0 bis 1,0%,
Mg: 0 bis 1,0%,
Mn: 0 bis 1,0%,
Ni: 0 bis 1,0%,
Sb: 0% bis 1,0% und
Rest: Zn und Verunreinigungen.

## Revendications

1. Tôle d'acier galvanisé à chaud au trempé, ayant une tôle d'acier de base et une couche de placage, dans laquelle

la tôle d'acier de base a une composition chimique contenant, en % en masse,
C : 0,0005 à 0,0100 %,
Si : 0,01 à 0,50 %,
Mn : 0,01 à 2,00 %,
P : 0,100 % ou moins,
S : 0,0100 % ou moins,
N : 0,0200 % ou moins,
Ti : 0,040 à 0,180 %,
Nb : 0 à 0,100 %,
B : 0,0005 à 0,0100 %,
Al : 0 à 1,000 %,
Cu : 0 à 1,000 %,
Cr : 0 à 2,000 %,
Ni : 0 à 0,500 %,
Mo : 0 à 3,000 %,
W : 0 à 0,100 %,
V : 0 à 1,000 %,
O : 0 à 0,020 %,
Ta : 0 à 0,100 %,
Co : 0 à 3,000 %,
Sn : 0 à 1,000 %,
Sb : 0 à 0,500 %,
As : 0 à 0,050 %,
Mg : 0 à 0,050 %,
Zr : 0 à 0,050 %,
Ca : 0 à 0,0500 %,
REM (éléments des terres rares) : 0 à 0,0500 %, et
pour le reste du Fe et des impuretés,
l'écart type SD trouvé dans la condition 1 qui suit est de 0,40 ou moins, et
l'intervalle I trouvé dans la condition 2 qui suit est de 50 $\mu$m ou moins :

condition 1 : un microanalyseur à sonde électronique, EPMA, est utilisé pour diviser une région carrée de 2 mm au niveau d'une surface de la tôle d'acier de base en une pluralité de 400 x 400 zones pour une cartographie élémentaire et une identification des intensités de Mn au niveau des zones individuelles, et l'écart type SD est trouvé à partir de la distribution du nombre de points de détection des intensités de Mn au niveau de la région carrée ;
condition 2 : un microanalyseur à sonde électronique, EPMA, est utilisé pour diviser une région carrée de 2 mm au niveau d'une surface de la tôle d'acier de base en une pluralité de 400 x 400 zones pour une cartographie élémentaire et une identification des intensités de Mn au niveau des zones individuelles, la valeur moyenne $MI_{ave}$ des intensités de Mn au niveau de la région carrée est identifiée ; la région carrée est divisée en 400 régions dans la direction perpendiculaire à la direction de laminage pour que soient obtenues 400 régions divisées, parmi ces régions divisées, celles ayant 50 % ou plus de zones présentant des intensités de Mn supérieures de 34 % ou plus à la valeur moyenne $MI_{ave}$ sont définies comme étant des "premières régions", parmi ces régions divisées, celles ayant 50 % ou plus de zones présentant des intensités de Mn inférieures de 34 % ou plus à la valeur moyenne MI$_{ave}$ sont définies comme étant des "deuxièmes régions", et l'intervalle I des premières régions se joignant mutuellement à travers les deuxièmes régions dans la région carrée est trouvé, dans laquelle si, dans une cartographie EPMA, la première région et la deuxième région sont présentes de façon répétées et plusieurs intervalles I sont identifiés, l'intervalle le plus important parmi les plusieurs intervalles I doit seulement être de 50 μm ou moins, et s'il n'y a pas de premières régions et de deuxièmes régions présentes dans la cartographie EPMA, l'intervalle I est estimé être de 0 μm.

2. Tôle d'acier galvanisé à chaud au trempé selon la revendication 1, dans laquelle la composition chimique contient, en % en masse,
Mn : 0,01 à 1,30 % ou 1,70 à 2,00 %.

3. Tôle d'acier galvanisé à chaud au trempé selon la revendication 1 ou 2, dans laquelle la composition chimique contient, en % en masse, au moins un élément choisi dans le groupe constitué par :

Nb : 0,001 à 0,100 %,
Al : 0,001 à 1,000 %,
Cu : 0,001 à 1,000 %,
Cr : 0,001 à 2,000 %,
Ni : 0,001 à 0,500 %,
Mo : 0,001 à 3,000 %,
W : 0,001 à 0,100 %,
V : 0,001 à 1,000 %,
O : 0,001 à 0,020 %,
Ta : 0,001 à 0,100 %,
Co : 0,001 à 3,000 %,
Sn : 0,001 à 1,000 %,
Sb : 0,001 à 0,500 %,
As : 0,001 à 0,050 %,
Mg : 0,001 à 0,050 %,
Zr : 0,001 à 0,050 %,
Ca : 0,0001 à 0,0500 %, et
REM : 0,0001 à 0,0500 %.

4. Tôle d'acier galvanisé à chaud au trempé selon l'une quelconque des revendications 1 à 3, dans laquelle la microstructure de la tôle d'acier de base est, en proportion en superficie :

ferrite : 94 à 100 %,
martensite et bainite au total : 0 à 4 %, et
austénite résiduelle : 0 à 2 %,
dans laquelle la microstructure est déterminée comme spécifié dans la description.

5. Tôle d'acier galvanisé à chaud au trempé selon l'une quelconque des revendications 1 à 4, dans laquelle la composition chimique de la couche de placage contient, en % en masse,

Fe : 5 à 25 %,
Al : 0 à 1,0 %,
Si : 0 à 1,0 %,
Mg : 0 à 1,0 %,
Mn : 0 à 1,0 %,
Ni : 0 à 1,0 %,
Sb : 0 à 1,0 %, et
le reste : Zn et impuretés.

# FIG. 1

SURFACE LAYER

CENTER

CONCENTRATED Mn PARTS (MICROSEGREGATION)

ROLLING

CONCENTRATED Mn PARTS STRETCHED IN STREAKS

← Cz CROSS-SECTION

EP 4 343 011 B1

FIG. 2A :STEEL SHEET BEFORE ANNEALING

HIGH ←―――― SURFACE Mn
CONCENTRATION ―――→ LOW ―― STEEL SHEET SURFACE

―― STEEL SHEET

FIG. 2B :STEEL SHEET AFTER ANNEALING

MANY ←―――― Mn OXIDES ―――→ FEW ―― STEEL SHEET SURFACE

―― STEEL SHEET

FIG. 2C :HOT DIP GALVANIZED STEEL SHEET

FAST ←―――― ALLOYING
SPEED ―――→ SLOW ―― PLATING LAYER

―― STEEL SHEET - PLATING INTERFACE

―― STEEL SHEET

FIG. 2D :HOT DIP GALVANNEALED STEEL SHEET

THICK ←―――― PLATING
LAYER ―――→ THIN ―― PLATING LAYER

―― STEEL SHEET - PLATING INTERFACE

―― STEEL SHEET

# FIG. 3

**2mm (400 SECTIONS)** (horizontal)

**2mm (400 SECTIONS)** (vertical)

Color scale: 3.40, 3.30, 3.20, 3.10, 3.00, 2.90, 2.80, 2.70, 2.60, 2.50, 2.40, 2.30, 2.20, 2.10, 2.00

MnKa — 500 um
Max.:4.72, Min.:0.32, Ave.:2.94

EPMA MAPPING
FOR Mn

(Graph — right side)
Y-axis: NUMBER OF DETECTION POINTS (POINTS): 0, 5,000, 10,000, 15,000, 20,000
X-axis: Mn CONCENTRATION (wt%): 0, 1, 2, 3, 4, 5

IDENTIFICATION OF
STANDARD DEVIATION
SD

EP 4 343 011 B1

# FIG. 4A

IDENTIFICATION OF
AVERAGE VALUE $MI_{ave}$ OF
Mn INTENSITIES

EPMA MAPPING FOR Mn
(RECTANGULAR REGIONS:2mm×2mm)

# FIG. 4B

IDENTIFICATION OF
FIRST REGIONS AND SECOND REGIONS
AND IDENTIFICATION OF
INTERVAL I

EPMA MAPPING FOR Mn
(RECTANGULAR REGIONS:2mm×2mm)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006291272 A
- JP 2016132801 A
- WO 2016170794 A
- JP 2007239011 A